# EUROPEAN PATENT APPLICATION

(11) **EP 4 593 251 A1**
(43) Date of publication of application: **30.07.2025**
(21) Application number: 24153832.1
(22) Date of filing: 25.01.2024
(51) Int. Cl.: H02J 50/40, H02J 50/80, H02J 50/90, H02J 50/60, H02J 50/10, H02J 50/12

(54) **WIRELESS POWER TRANSFER SYSTEM**

(71) Applicant: LEGO A/S, 7190 Billund (DK)
(72) Inventor: KNIGHTS, Andrew James, Cambridge (GB); GUPTA, Siddharth, Cambridge (GB); NORRIS, Mark Henry, Cambridge (GB); ASHBEY, Isobel Jane, Cambridge (GB); HACKLER, Till, Cambridge (GB); MORLEY, Andrew Brian, Cambridge (GB)
(74) Representative: Guardian IP Consulting I/S

(57) **Abstract**

Disclosed is a wireless power transmitter (5) comprising a transmitter coil (10) configured to transmit a wireless power transfer signal, the wireless power transfer signal being transmitted using a magnetic charging field configured for transmission of power, the magnetic charging field being caused by a current in the transmitter coil, a transmitter control unit (20) configured to define a power-transmission mode of operation and a blanking-period mode of operation, and configured to switch between the power-transmission mode of operation and the blanking-period mode of operation during normal operation, wherein in the power-transmission mode of operation an alternating current is generated in the transmitter coil by the transmitter control unit and in the blanking-period mode of operation substantially no current is generated in the transmitter coil by the transmitter control unit, wherein the transmitter control unit is further configured to determine a first proximity indicator which is indicative of a detection of an external magnetic field. Also disclosed is a method of operating a wireless power transmitter.

## Description

### Field of the invention

The invention relates to a wireless power transfer system, in particular to a wireless power transfer system for use in a toy system.

### Background

Power transmission via magnetic induction is by now well-known, and is utilised widely to charge power receiver devices having one or more receiver coils. When charging of a power receiver device is desired, the device is placed such that at least one of its receiver coils can couple to a transmitter coil in a power transmitter device. Such an arrangement allows for wireless power transfer between the power transmitter device and the power receiver device without requiring any wires or physical electrical connections between the transmitter and receiver devices to be made.

A known concern in this type of wireless power transfer systems is the exposure to the human body of radio frequency (RF) electromagnetic (EM) radiation. For this reason, international guidelines for limiting electromagnetic field exposure are in place and have been widely adopted into regulations worldwide. One example of this is a measure known as Specific Absorption Rate (SAR) with units of W/kg which may be used to evaluate the exposure and provide a way for manufacturers to test their devices. Thus, SAR testing and evaluation is a common practice in any device that has wireless charging capability. In regards to wireless power transfer systems for toy systems, safety measures take on another dimension as they cannot rely on the same measure of impulse control and common sense on the part of the user as systems designed to be used by adults.

Hence, it is imperative to provide wireless power transmitters which provide wireless charging while providing reasonable safety measures.

Further, it is desirable to provide wireless power transmitters which implement relevant safety procedures in power transfer systems, and preferably multiple safety procedures.

Generally, improved operation of a power transfer system would be advantageous, such as an approach allowing increased flexibility, reduced cost, reduced complexity, improved safety features and/or improved performance would be advantageous.

In systems where a high degree of built-in safety is wanted, such as toy systems, it is particularly desirable to have reliable safety procedures in place.

Additionally, a power transfer system suitable for use in toy systems may advantageously be user-friendly, even for smaller children, and either require no user involvement at all, or, if required, a user involvement that can be accomplished by smaller children, for example taking into consideration their available cognitive skills and hand control.

Various embodiments of a wireless power transfer system and a method of operating a wireless power transmitter disclosed herein address one or more of the above needs and/or other needs that exist in the field of wireless power transfer systems.

### Summary

Disclosed herein is a wireless power transmitter, a wireless power transfer system, and a method of operating a wireless power transmitter.

A wireless power transmitter disclosed herein comprises:
- a transmitter coil configured to transmit a wireless power transfer signal, the wireless power transfer signal being transmitted using a magnetic charging field configured for transmission of power, the magnetic charging field being caused by a current in the transmitter coil,
- a transmitter control unit configured to define a power-transmission mode of operation and a blanking-period mode of operation and configured to switch between the power-transmission mode of operation and the blanking-period mode of operation during normal operation, wherein in the power-transmission mode of operation an alternating current is generated in the transmitter coil by the transmitter control unit, and in the blanking-period mode of operation substantially no current is generated in the transmitter coil by the transmitter control unit,
and wherein the transmitter control unit is further configured to determine a first proximity indicator which is indicative of a detection of an external magnetic field, such as an external charging field.

Thus, the transmitter control unit is configured to regulate the amplitude of the current in the transmitter coil and to reduce the amplitude of the current in the transmitter coil to substantially zero during the blanking-period mode. Further, the transmitter control unit may monitor the current, or a voltage, in the transmitter coil. This may be used to detect indications of an external magnetic field indicative of another, external, power transmitter being in proximity and producing the mentioned external magnetic field. Each wireless power transmitter should, of course, itself be designed to produce a charging field that is within the safety limits of electromagnetic field exposure as provided for in regulation, but if two or more wireless power transmitters are brought close together, the combined exposure may exceed the regulation safety limits. Thus, it is desirable that a wireless power transmitter is configured to evaluate whether another wireless power transmitter is nearby; In particular, whether another wireless power transmitter is closer than desired in order to provide a safe experience for a user.

"External magnetic field" refers to an externally-produced magnetic field, i.e. a magnetic field that is produced by another entity, such as by another, external, wireless power transmitter. Such an external wireless power transmitter may, or may not, be a wireless power transmitter as disclosed herein.

A wireless power transmitter may also be referred to as a charger or a charging device. It is configured for wirelessly transmitting power to a wireless power receiver.

The wireless power transmitter may be configured to transmit a wireless power transfer signal using radio frequencies that are designated for ISM applications, i.e. to use an ISM band. The wireless power transmitter may be configured to transmit a wireless power transfer signal having a centre frequency in the frequency range 100 kHz - 50 MHz. For example, the wireless power transmitter may be configured to transmit a wireless power transfer signal having a centre frequency in the frequency range 15 - 50 MHz, such as 18 - 45 MHz, such as 21 - 40 MHz, such as 25 - 35 MHz. In some embodiments, the wireless power transmitter is configured to transmit a wireless power transfer signal having a centre frequency in the frequency range 100 kHz - 200 kHz. In some embodiments, the wireless power transmitter is configured to transmit a wireless power transfer signal having a centre frequency in the frequency range 5 MHz - 8.5 MHz. In some embodiments, the wireless power transmitter is configured to transmit a wireless power transfer signal having a centre frequency in the frequency range 12 MHz - 15 MHz. The wireless power transmitter may be configured for transmission of wireless power transfer signals at more than one frequency. In some embodiments, the wireless power transmitter is configured to transmit a wireless power transfer signal having a centre frequency in an ISM band comprising 140 kHz, and/or an ISM band comprising 6.78 MHz, and/or an ISM band comprising 13.56 MHz, and/or an ISM band comprising 27.12 MHz, where, for a given centre frequency, the wireless power transfer signal may be configured to comply with a regulated bandwidth of an ISM band comprising the given centre frequency. For example, the wireless power transmitter may be configured to transmit a wireless power transfer signal having a centre frequency centred at or near 140 kHz, and/or centred at or near 6.78 MHz, and/or centred at or near 13.56 MHz, and/or centred at or near 27.12 MHz, where, for a given centre frequency, the wireless power transfer signal may be configured to comply with a regulated bandwidth of an ISM band comprising the given centre frequency.

In order to monitor the current, or a voltage, in the transmitter coil, the wireless power transmitter may be configured to provide a coil-signal, such as a coil-current-signal or coil-voltage-signal, that is, respectively, representative of the current in the transmitter coil and/or representative of variations in the current in the transmitter coil, or representative of a voltage of the transmitter coil and/or representative of variations in a voltage in the transmitter coil. In some embodiments, the transmitter control unit is further configured to receive a coil-signal that is representative of the current, or a voltage, in the transmitter coil and/or representative of variations in the current, or a voltage, in the transmitter coil. The coil-signal is representative of a determined, such as measured, current, or voltage, in the transmitter coil and therefore not necessarily representative of the current, or voltage, generated by the transmitter control unit. The transmitter control unit may monitor the current, or voltage, in the transmitter coil by obtaining the coil-signal at regular intervals, or substantially continuously.

An external wireless power transmitter producing a charging field, referred to as an external magnetic field or external charging field, may be detectable by effects caused by its charging field, such as effects caused by its charging field on the current in the transmitter coil. Such effects may be detectable by assessment of the coil-signal. For example, when the wireless power transmitter is in the power-transmission mode, the presence of an external magnetic field at or near the transmitter coil may cause variations in the current in the transmitter coil such as an increased or decreased current compared to the current generated by the transmitter control unit, and/or fluctuations in the current generated by the transmitter control unit. When the wireless power transmitter is in the blanking-period mode, the presence of any current, steady or fluctuating, may be an indication of an external magnetic field, such as an external charging field as no current in the coil is being generated by the transmitter control unit. The transmitter control unit may be configured to determine the first proximity indicator based at least in part on a coil current that was measured in either or both modes of operation, i.e. in either or both of the power-transmission mode of operation and the blanking-period mode. For example, the transmitter control unit may base its determination of the first proximity indicator at least in part on two or more coil-signals which may be representative of the current, or a voltage, in the transmitter coil at different times and where, possibly, the wireless power transmitter is in different modes. Thus, in some embodiments, the coil-signal, on which the determination of the first proximity indicator is based at least in part, is a coil-signal that is representative of the current, or a voltage, in the transmitter coil at a time, where the wireless power transmitter is in the blanking-period mode of operation, and/or
the coil-signal, on which the determination of the first proximity indicator is based at least in part, is a coil-signal that is representative of the current, or a voltage, in the transmitter coil at a time, where the wireless power transmitter is in the power-transmission mode of operation.

The operation of the wireless power transmitter may be characterised by the modes of operation, and possibly the duration of and/or switching between the modes of operation. The operation of the wireless power transmitter may be characterised by a transmission time period which is a time period during which the wireless power transmitter is in the power-transmission mode of operation and by a blanking time period during which the wireless power transmitter is in the blanking-period mode of operation. The time periods may be discrete time periods. Either, or both, of the transmission time period and the blanking time period may be predetermined time periods, or either, or both, may be determined dynamically by the transmitter control unit. In the latter case, the transmitter control unit is able to respond in a continuous manner to various occurrences by reducing or extending the time the wireless power transmitter is in either mode of operation. Alternatively, the transmitter control unit may be configured such that the transmission time period and the blanking time period are predetermined time periods from which the transmitter control unit can deviate, when needed. Thus, in some embodiments, the transmission time period and/or the blanking time period is a predetermined time period, or the transmission time period and/or the blanking time period is dynamically set by the transmitter control unit, or the transmitter control unit may be configured to switch between a predetermined time period and a dynamic time period for one or both of the power-transmission mode and the blanking-period mode. For example, the transmitter control unit may be configured to dynamically switch from the power-transmission mode of operation to the blanking-period mode of operation based on the first proximity indicator, i.e. based on an indication of the detection of an external magnetic field. In some instances, an external magnetic field may be easier to detect based on a coil-signal from the blanking-period mode compared to basing it on a coil-signal from the power-transmission mode of operation. Therefore, the power transmitter may switch from the power-transmission mode to the blanking-period mode based on the determined first proximity indicator. This allows the wireless power transmitter to obtain a second indication of an external magnetic field and/or to obtain a possibly more reliable indication of an external magnetic field.

A predetermined time period may be a fixed time period, or it may be one or more fixed time periods, such as two or more time periods being repeated in a pattern. For example, a first time period may be followed by a second time period which again is followed by a third time period, where the third time period is followed by the first time period, and so on.

The duration of the blanking time period may be significantly shorter than the transmission time period, at least during normal operation of the wireless power transmitter. In this way, most of the operational time of the wireless power transmitter is spent providing wireless power to a wireless power receiver. In some embodiments, the blanking time period is less than 800 milliseconds, such as less than 500 millisecond, such as less than 300 milliseconds, such as less than 200 milliseconds, such as less than 100 milliseconds. In some embodiments, the blanking time period is at least 0.1 milliseconds, such as at least 1 millisecond, such as at least 10 milliseconds, such as at least 100 milliseconds. In some embodiments, the transmission time period is at least 0.1 seconds, such as at least 1 second, such as at least 2 seconds, such as at least 3 seconds, such as at least 4 seconds. The operation of the wireless power transmitter may be characterised by a repetition period, where the repetition period is the time between two consecutive blanking-period modes or two consecutive power-transmission modes. For example, the repetition period may be defined by the beginning of one blanking time period and until the beginning of the next blanking time period. The wireless power transmitter may be configured such that the repetition period is at least 0.1 seconds, such as at least 1 second, such as at least 2 seconds, such as at least 3 seconds, such as at least 4 seconds, such as at least 10 seconds, such as at least 20 seconds, such as at least 30 seconds. The wireless power transmitter may be configured such that the repetition period is around 30 minutes or less, such as 15 minutes or less, such as 10 minutes or less such as 5 minutes or less, such as 1 minute or less. The wireless power transmitter may be configured such that the repetition period is between 0.5 seconds and 15 minutes, such as between 1 second and 10 minutes, such as between 5 seconds and 5 minutes, such as between 15 seconds and 1 minute. A shorter repetition period allows for a faster and possibly more robust synchronisation, but also means that a higher proportion of time is spent not charging due to blanking periods. Thus, there is a trade-off in the selection of a suitable synchronisation time.

Thus, the wireless power transmitter may be configured to enter the blanking-period mode at regular intervals, e.g. at start of a repetition period. This results in the charging field having a characteristic which may be detected by other devices, in particular by a wireless power receiver. As the wireless power receiver is harvesting power from the charging field, the periodic blanking time periods may be detectable by the wireless power receiver, at least if the blanking time period is sufficiently long for this. Thus, the charging field can be said to have a "signature" in the characteristics of the charging field, such as the blanking time period, repetition period and/or the transmission time period.

In some embodiments, the wireless power transmitter is configured to select one or more of the transmission time period, the blanking time period, and/or the repetition period upon start-up. One or more of the transmission time period, the blanking time period, and/or the repetition period may be selected from a predetermined set of possible time periods for each period. Alternatively, one or more of the transmission time period, the blanking time period, and/or the repetition period may be selected after a period of time, and/or in response to an event. The wireless power transmitter may be further configured to select a transmission time period, a blanking time period, and/or a repetition period that provides the most efficient charging from the periods available to it.

The wireless power transmitter may be configured to determine the first proximity indicator at start-up. The wireless power transmitter may be configured to start in the blanking-period mode of operation. In some instances, an external magnetic field may be easier to detect based on a coil-signal from the blanking-period mode compared to basing it on a coil-signal from the power-transmission mode of operation. Therefore, by starting in the blanking-period mode of operation the wireless power transmitter may optimise the detection of an external magnetic field at start-up and prior to its first transmission of wireless power.

The wireless power transmitter may further comprise a first transmitter communication unit configured for sending and receiving a wireless signal, the transmitter control unit being configured to determine a signal strength indicator indicative of the signal strength of a received wireless signal from an external wireless power transmitter, and the transmitter control unit may be further configured to determine a second proximity indicator based on a signal strength indicator. A signal strength indicator is an indicator of the power level being received by an antenna. The signal strength indicator may be determined using any of the well-known methods. The first transmitter communication unit may be configured for e.g. radio, Bluetooth, or other suitable wireless communication protocols. In some embodiments, the first transmitter communication unit is configured for Bluetooth. The signal strength indicator is indicative of another, external, power transmitter producing the signal, and may be used in a well-known manner to evaluate the proximity of an external wireless power transmitter. In particular, the signal strength indicator may be used to determine whether the external wireless power transmitter is closer than desired in order to provide a safe experience for a user.

In some embodiments, the wireless power transmitter further comprises a first transmitter communication unit configured for sending and receiving a wireless signal, the transmitter control unit being configured to determine a signal strength indicator indicative of the signal strength of a received wireless signal from an external wireless power transmitter, the wireless power transmitter being configured to determine a signal strength indicator indicative of the signal strength of a received signal from an external wireless power transmitter,
wherein the transmitter control unit is further configured to determine a second proximity indicator indicative of a proximity of the external wireless power transmitter, the second proximity indicator being based on the signal strength indicator.

In some embodiments, the signal strength indicator may be used to estimate a distance between the wireless power transmitter and another wireless power transmitter. For example, the BLE RSSI (Bluetooth Received Signal Strength Indication) may be used in the estimation of a distance or relative distance between the wireless power transmitter and another wireless power transmitter. The wireless power transmitter may be configured for connecting, and possibly pairing, to other wireless power transmitters within range via the first transmitter communication unit.

In some embodiments, the transmitter control unit is configured to determine a distance based on the signal strength indicator. Distance estimation by using radio signal strength is generally known to be difficult, and the methods sometimes unreliable due to the significant interference with the signal strength caused by objects between the transmitting and receiving antenna. However, the closer the transmitting and receiving antenna are the fewer objects are generally in the way of the signal between the two antennas. Also, objects interfering will generally dampen the signal, which means that a received signal strength above a predetermined threshold level may be used as an indication that the transmitting and receiving antenna are too close, such as less than an allowed predetermined proximity distance. In some embodiments, the transmitter control unit is configured to determine whether the signal strength indicator is above a predetermined threshold level.

The transmitter control unit may be further configured for foreign object detection (FOD). A foreign object detection is yet a third way that the wireless power transmitter can detect an external charger. The wireless power transmitter may be configured for a determination of a foreign object detection, for example by any of known methods of foreign object detection, or by any of the methods of foreign object detection as described herein. More than one method of foreign object detection may be utilised.

In some embodiments, the transmitter control unit is further configured to determine a foreign object loss, the foreign object loss being indicative of the difference in power transmitted by the wireless power transmitter and power received by one or more wireless power receivers, and wherein the transmitter control unit is configured to reduce the current generated by the transmitter control unit in the transmitter coil or to shut down power transmission in response to the foreign object loss indicating a foreign object. In some embodiments, the transmitter control unit further comprises a second transmitter communication unit configured for obtaining one or more wirelessly transmitted status messages, each status message comprising data on a received power level, and the transmitter control unit may be configured to:
- determine a transmitted power level, where the transmitted power level is the level of wireless power transmitted by the wireless power transmitter,
- determine a total received power based on the obtained data on received power levels, and
- determine a foreign object loss based on the total received power and the transmitted power level.

The wireless power transmitter may be configured to receive status messages via a broadcasting system, i.e. a system allowing for reception of data without pairing between communicating devices.

The determined transmitted power level may be compared to the determined total received power to arrive at a determination of whether a foreign object is receiving power from the wireless power transmitter. The skilled person will know of various procedures for making foreign object determinations as such are known in foreign object detection. For example, the determination of the foreign object loss may be made by a simple subtraction of the total received power from the transmitted power level.

The charging field signature, i.e. the detectable characteristics of the charging field, as described above makes it possible for a wireless power receiver to determine the charging field signature associated with the charging power it receives as the charging field signature is part of the wireless power transfer signal it receives. This may be used in FOD as the wireless power transmitter may receive status messages from one or more wireless power receivers which are charging on another wireless power transmitter e.g. if status messages are sent on a broadcast system. By including the charging field signature in the status message the wireless power transmitter may be able to distinguish which status messages are relevant to it for determination of the total received power. That is, including the charging field signature in the status message allows the wireless power transmitter to ignore the status reports on received power levels from wireless power receivers which are being charged by a wireless power transmitter with a different charging field signature, when determining the total received power. Thus, in a way, the charging field signature can be used as a "fingerprint" of the wireless power transmitter, although the analogy is not entirely accurate, as the wireless power transmitter may be configured to change its charging field signature, for example at start-up.

Alternatively, or additionally, the FOD may rely on a time synchronisation between the wireless power transmitter and one or more wireless power receivers. A synchronisation signal indicating a synchronisation time is transmitted by the wireless power transmitter and received by wireless power receivers which coordinate their power harvesting based on the detected synchronisation time. The synchronisation signal may be comprised in a charging field signature of the wireless power transmitter and/or may be a radio signal. Configurations of the charging field signature may be as described herein. Thus, in some embodiments, the wireless power transmitter further comprises a transmitter control unit configured to perform a Foreign Object Detection comprising obtaining one or more measurements on power harvested from the wireless power transmitter,
wherein the wireless power transmitter is configured to transmit a signal at predetermined time intervals, the signal indicating a synchronisation time,
wherein the transmitter control unit is configured to perform the one or more measurements on harvested power during one or more FOD time periods occurring at predetermined time intervals relative to the synchronisation time, and
wherein the transmitter control unit is configured to assume as part of its Foreign Object Detection that associated power receivers do not harvest power from it during the FOD time periods and/or that associated power receivers substantially reduce power harvesting from it during the FOD periods.

An advantage of performing the measurements on harvested power during periods where power receivers which are associated with the wireless power transmitter do not harvest power or substantially nullify power harvesting is a reduction of uncertainty in the estimation of harvested power as any power harvest during the FOD time periods must be due to one or more objects which do not conform to the predetermined FOD time periods. An associated power receiver is one that is configured to work together with the wireless power transmitter. Thus, any power receiver which might otherwise be able to charge from the wireless power transmitter may be considered a Foreign Object by the wireless power transmitter if it is not configured to cease power harvesting during FOD time periods. The wireless power transmitter and associated wireless power receiver will thus be configured to conform to the same FOD time periods relative to the synchronisation time. The first and second transmitter communications units may be the same communication unit. Alternatively, the first and second transmitter communications units may be different. The first and second transmitter communications units may be configured for different communications protocols. In some embodiments, the first and second transmitter communication units are configured for different communication ranges. In some embodiments, the communication range of the second transmitter communication unit is more than 50 cm, such as more than 75 cm, such as more than 1 m, such as more than 2 m, such as more than 4 m, such as more than 6 m, such as more than 8 m, such as more than 10 m (meters). The communication range may be a standard communication range of the communication protocol used, as the actual communication range in a given situation may be affected by interference as is well known.

The wireless power transmitter may be configured to reduce its wireless power output, shut down power transmission, or shut down entirely if any of the proximity indicators indicates an external charger being within a predetermined proximity of the wireless power transmitter. Thus, in some embodiments, the transmitter control unit is configured to reduce the current generated by the transmitter control unit in the transmitter coil, or to shut down power transmission in response to any proximity indicator indicating the proximity of an external wireless power transmitter. Proximity of an external wireless power transmitter may be indicated by the first proximity indicator, and/or by the second proximity indicator, and/or by FOD, which may detect an external wireless power transmitter as a foreign object. Thus, the transmitter control unit may be further configured to shut down power transmission or to reduce the current generated by it in the transmitter coil in response to the transmitter control unit detecting an external charger as a foreign object.

Additionally, or alternatively, the wireless power transmitter may be configured to start a timer in response to any proximity indicator or a determined foreign object loss indicating the proximity of an external wireless power transmitter, where the wireless power transmitter is configured to resume normal operation after expiry of the timer and/or after the indication of an external wireless power transmitter has been resolved, i.e. at a time at which there is no longer an indication. The transmitter control unit may be configured to start the timer. The transmitter control unit may be further configured to decide when to resume normal operation after expiry of a timer.

Thus, the wireless power transmitter is configured to utilise one or more techniques for evaluating the proximity of an external charger, i.e. of another wireless power transmitter. The wireless power transmitter may be configured to utilise a plurality of independent methods for evaluating the proximity of another charger. The wireless power transmitter may be configured to combine the information it obtains indicating proximity of an external wireless power transmitter. For example, the transmitter control unit may be configured to determine a likelihood that an external wireless power transmitter is within a predetermined proximity by combining information obtained from a coil-signal with that obtained from a signal strength indicator. As another example, the transmitter control unit may be configured to determine a likelihood that an external wireless power transmitter is within a predetermined proximity by combining information obtained from a signal strength indicator with a foreign object loss. This allows the wireless power transmitter to respond even in those instances where a single method does not provide enough information.

In some embodiments, the wireless power transmitter is part of a toy set, such as a toy construction set. Thus, the wireless power transmitter may be configured for being used by a child, such as by a smaller child.

A wireless power transfer system disclosed herein comprises a wireless power transmitter as disclosed herein, and one or more wireless power receivers configured for harvesting wireless power from the wireless power transmitter.

The one or more wireless power receivers may comprise:
- a receiver coil configured to receive a wireless power transfer signal, and
- a load coupled to the receiver coil, the load being configured to receive power from the receiver coil.

The wireless power receiver may be configured for facilitating a foreign object detection (FOD) by a wireless power transmitter. The wireless power receiver may be configured according to any of known methods of foreign object detection, or by any of the methods of foreign object detection as described herein. More than one method of foreign object detection may be utilised.

For example, the wireless power receiver may be configured to determine and communicate a received power level. The wireless power receiver may further comprise a receiver control unit configured to determine a received power level, where the received power level is the level of wireless power received, and a receiver communication unit configured to wirelessly transmit a status message, the status message comprising the received power level. In some embodiments, the receiver control unit is further configured to determine a transmitter charging field signature associated with the received power, and the status message further comprises data on the associated charging field signature.

Alternatively, or additionally, the wireless power receiver may comprise a receiver control unit configured to adjust power harvesting via the receiver coil, wherein the receiver control unit is configured to determine a synchronisation time from a signal received from a wireless power transmitter, and wherein the receiver control unit is configured to reduce or substantially nullify power harvesting during one or more FOD time periods occurring at predetermined time intervals relative to the synchronisation time. In some embodiments, the receiver control unit is configured to determine a charging field signature of a power transmitter from which the power receiver is receiving power, the transmitter charging field signature indicating the synchronisation time, or the signal indicating a synchronisation time is a radio signal.

The wireless power receiver may be configured to receive power from a wireless power transfer signal using radio frequencies that are designated for ISM applications, i.e. using an ISM band. The wireless power receiver may be configured to receive, and charge from, a wireless power transfer signal having a centre frequency in the frequency range 100 kHz - 50 MHz. For example, the wireless power receiver may be configured to receive, and charge from, a wireless power transfer signal having a centre frequency in the frequency range 15 - 50 MHz, such as 18 - 45 MHz, such as 21 - 40 MHz, such as 25 - 35 MHz. In some embodiments, the wireless power receiver is configured to receive power from a wireless power transfer signal having a centre frequency in the frequency range 100 kHz - 200 kHz. In some embodiments, the wireless power receiver is configured to receive power from a wireless power transfer signal having a centre frequency in the frequency range 5 MHz - 8.5 MHz. In some embodiments, the wireless power receiver is configured to receive power from a wireless power transfer signal having a centre frequency in the frequency range 12 MHz - 15 MHz. The wireless power receiver may be configured to charge from more than one centre frequency of a wireless power transfer signal, each at a different time. In some embodiments, the wireless power receiver is configured to receive a wireless power transfer signal having a centre frequency in an ISM band comprising 140 kHz, and/or an ISM band comprising 6.78 MHz, and/or an ISM band comprising 13.56 MHz, and/or an ISM band comprising 27.12 MHz, where, for a given centre frequency, the wireless power transfer signal may be configured to comply with a regulated bandwidth of an ISM band comprising the given centre frequency. For example, the wireless power receiver may be configured to receive power from a wireless power transfer signal having a centre frequency centred at or near 140 kHz, and/or centred at or near 6.78 MHz, and/or centred at or near 13.56 MHz, and/or centred at or near 27.12 MHz, where, for a given centre frequency, the wireless power transfer signal may be configured to comply with a regulated bandwidth of an ISM band comprising the given centre frequency. The wireless power receiver may be configured to be able to receive power from a wireless power transfer signal comprising radio frequencies that are higher than those used in the 13.56 MHz RFID band. The wireless power receiver may further comprise an NFC/RFID tag reader.

In some embodiments, the communication range of the receiver communication unit is longer than the effective charging range of the wireless power transfer signal. The receiver communication unit may send status messages and may additionally be configured to communicate with other wireless power receivers. In some embodiments, the communication range of the receiver communication unit is more than 50 cm, such as more than 75 cm, such as more than 1 m, such as more than 2 m, such as more than 4 m, such as more than 6 m, such as more than 8 m, such as more than 10 m (meters). The communication range may be a standard communication range of the communication protocol used, as the actual communication range in a given situation may be affected by interference as is well known.

In some embodiments, the wireless power transfer system is part of a toy set, such as a toy construction set.

A method of operating a wireless power transmitter comprising a transmitter coil disclosed herein comprises the steps of:
- Transmitting a wireless power transfer signal in a power-transmission mode, the wireless power transfer signal being transmitted using a magnetic charging field configured for transmission of power, the magnetic charging field being caused by a current in the transmitter coil,
- Reducing the current in the transmitter coil to substantially zero in a blanking-period mode,
- Switching between the power-transmission mode and the blanking-period mode,
- Determining a first proximity indicator indicative of a detection of an external magnetic field, such as an external charging field.

The wireless power transmitter may be a wireless power transmitter as disclosed herein.

In some embodiments, the method further comprises receiving a coil-signal that is representative of the current, or a voltage, in the transmitter coil and/or representative of variations in the current, or a voltage, in the transmitter coil. Determining the first proximity indicator may be based at least in part on the coil-signal. In some embodiments, the coil-signal, on which the determination of the first proximity indicator is based at least in part, is a coil-signal that is representative of the current, or a voltage, in the transmitter coil at a time, where the wireless power transmitter is in the blanking-period mode of operation, and/or the coil-signal, on which the determination of the first proximity indicator is based at least in part, is a coil-signal that is representative of the current, or a voltage, in the transmitter coil at a time, where the wireless power transmitter is in the power-transmission mode of operation.

The operation of the wireless power transmitter may be characterised by a transmission time period which is a time period during which the wireless power transmitter is in the power-transmission mode of operation and by a blanking time period during which the wireless power transmitter is in the blanking-period mode of operation. The transmission time period and/or the blanking time period may be a predetermined time period, or the transmission time period and/or the blanking time period may be dynamically set by the transmitter control unit, or the transmitter control unit may be configured to switch between a predetermined time period and a dynamic time period for one or both of the power-transmission mode and the blanking-period mode. The blanking time period may be at least 0.1 milliseconds, such as at least 1 millisecond, such as at least 10 milliseconds, such as at least 100 milliseconds, and/or the transmission time period may be at least 0.1 seconds, such as at least 1 second, such as at least 2 seconds, such as at least 3 seconds, such as at least 4 seconds. In some embodiments, the blanking time period is less than 800 milliseconds, such as less than 500 millisecond, such as less than 300 milliseconds, such as less than 200 milliseconds, such as less than 100 milliseconds.

In some embodiments, the method further comprises determining a signal strength indicator indicative of the signal strength of a received wireless signal from an external wireless power transmitter, and determining a second proximity indicator indicative of a proximity of the external wireless power transmitter, the second proximity indicator being based on the signal strength indicator.

In some embodiments, the method further comprises reducing the current generated by the transmitter control unit in the transmitter coil or shutting down power transmission in response to any proximity indicator indicating the proximity of an external wireless power transmitter.

In some embodiments, the method further comprises determining a foreign object loss, the foreign object loss being indicative of the difference in power transmitted by the wireless power transmitter and power received by one or more wireless power receivers.

In some embodiments, the method further comprises reducing the current generated by the transmitter control unit in the transmitter coil or shutting down power transmission in response to the foreign object loss indicating a foreign object.

Disclosed herein is a non-transitory computer readable medium having stored thereon instructions that when executed by processing circuitry of a wireless power transmitter cause the processing circuitry to perform the steps of the method of wirelessly transmitting power. The processing circuitry may be comprised in the transmitter control unit.

### Brief description of the drawings

FIG. 1 shows a schematic block diagram of a wireless power transmitter according to some embodiments;
FIG. 2 shows a schematic block diagram of a wireless power receiver in the form of a toy construction element according to some embodiments;
FIGS. 3-5 each show a prior art toy construction element;
FIGS. 6A and 6B show illustrative plots of coil current during power-transmission modes and blanking-period modes according to some embodiments;
FIG. 7 illustrates a charging field level of a wireless power transmitter according to some embodiments;
FIG. 8 illustrates a charging field level of a wireless power transmitter during power-transmission modes and blanking-period modes according to some embodiments;
FIG. 9 illustrates two wireless power transmitters according to some embodiments;
FIGS. 10A, 10B and 10C illustrates two wireless power transmitters according to some embodiments; and
FIGS. 11 and 12 show a flow chart of a method of operating a wireless power transmitter according to some embodiments.

### Detailed description

Various aspects and embodiments of a wireless power transmitter, a wireless power transfer system, and a method of operating a wireless power transmitter as disclosed herein will now be described with reference the drawings. In some embodiments, the aspects and embodiments will refer to toy construction elements in the form of bricks. However, the invention may be applied to other forms of toy construction elements for use in toy construction sets.

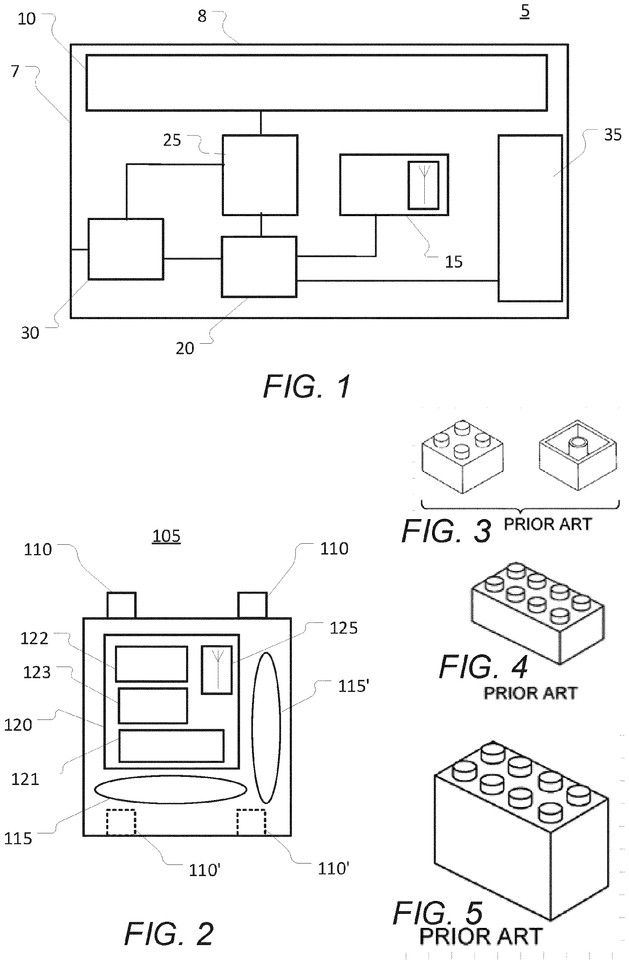

FIG. 1 shows a schematic block diagram of a wireless power transmitter 5 according to some embodiments.

The wireless power transmitter comprises a transmitter coil 10 which is connected electrically to inductive charging circuitry 25, a power adapter 30 for connecting the wireless power transmitter to a power grid or other power supply, a transmitter control unit 20, an optional first transmitter communication unit 15, and a user interface 35. The user interface may comprise buttons with which a user can interact with the wireless power transmitter, and/or it may comprise visible and/or tactile elements by which the wireless power transmitter can relay information to a user. The wireless power transmitter is configured to transmit a wireless power transfer signal using a magnetic charging field configured for transmission of power. The wireless power transfer signal can be utilised by a suitably configured wireless power receiver for wireless charging.

The wireless power transmitter 5 may comprise an encasing 7, i.e. a housing, configured for facilitating charging of one or more wireless power receivers by placement of the one or more wireless power receivers on or near a charging surface 8 of the wireless power transmitter. The charging surface 8 may comprise one or more substantially horizontal surfaces to allow one or more object, such as wireless power receivers, placed on it to be supported at rest by the wireless power transmitter, when the transmitter itself is positioned substantially horizontally. The charging surface may be a surface of the transmitter encasing 7 which is closest to the transmitter coil. The charging surface 8 may comprise one or more visible and/or tactile markings. The one or more visible and/or tactile markings may be configured to aid a user in placement of wireless power receivers on or near the charging surface. The wireless power transmitter may be configured to produce a charging field that is strong enough and which extends far enough away from the charging surface 8 that a wireless power receiver is able to harvest energy, i.e. receive power, even while at a distance from the charging surface 8. To produce such a charging field, i.e. one that extends far enough and is strong enough to allow a wireless power receiver to charge at a distance from the surface of the wireless power transmitter, means an increase in power output of the transmitter is needed. This increases the possible electromagnetic field exposure to a user and so the interest in additional safety measures in relation to exposure from multiple wireless power transmitters likewise increases.

In some cases, the wireless power transmitter 5 is configured for charging of a single wireless power receiver, while in other embodiments, the wireless power transmitter 5 is configured to allow charging of multiple wireless power receivers simultaneously. For example, the wireless power transmitter 5 may be configured for charging one or more wireless power receivers similar to the wireless power receiver 105 shown in fig. 2. The wireless power transmitter may be configured to support charging of power receivers having one or more of a plurality of supported receiver coil sizes. The wireless power receiver may be configured to support charging of a wireless power receiver that comprises more than one receiver coil, where each receiver coil may be a different size and/or shape, and/or to support charging of various wireless power receivers that each comprise a coil that may be a different size and/or shape to that of the other wireless power receivers.

The wireless power transmitter is configured to create a magnetic charging field which transmits a wireless power transfer signal, the magnetic charging field being caused by a current in the transmitter coil. The transmitter control unit 20 can regulate the current in the transmitter coil 10, and defines two modes of operation: a power-transmission mode of operation and a blanking-period mode of operation. In the power-transmission mode of operation an alternating current is generated in the transmitter coil by the transmitter control unit, while in the blanking-period mode of operation substantially no current is generated in the transmitter coil by the transmitter control unit. The transmitter control unit 20 is configured to switch between the two modes during normal operation and may do so at predetermined time intervals or dynamically.

The transmitter control unit 20 may comprise e.g. a microcontroller, a microprocessor, or other suitable processing unit. The transmitter control unit 20 may be configured to handle numerous control functions related to the wireless power transmitter. For example, the transmitter control unit 20 may control the functioning of the transmitter coil, the transmitter communications unit, etc. At least some functions of the transmitter control unit 20 may be implemented in hardware.

The transmitter control unit 20 is further configured to determine a first proximity indicator which is indicative of a detection of an external magnetic field. By being configured to detect an external magnetic field, such as an external charging field, i.e. a charging field produced by an external device, an active wireless power transmitter in proximity of the wireless power transmitter may be detected. The term "active" means that the external wireless power transmitter is producing a charging field. The wireless power transmitter may then decide whether to take steps in response to the detection of an external magnetic field such as e.g. reducing the current generated by the transmitter control unit in the transmitter coil, for example to a trickle charge level, or shut down power transmission such that no current is generated in the transmitter coil by the transmitter control unit.

Additionally, the wireless power transmitter may utilise a second technique to detect an external power transmitter by analysis of the signal strength of a wireless signal transmitted from the external wireless power transmitter. For this purpose, the wireless power transmitter may comprise a first transmitter communication unit 15 configured for sending and receiving a wireless signal. The first transmitter communication unit 15 may receive a wireless signal from an external wireless power transmitter, and the transmitter control unit is configured to determine a signal strength indicator indicative of the signal strength of the received signal. Based on the signal strength indicator, the transmitter control unit may then determine a second proximity indicator indicative of a proximity of the external wireless power transmitter. The second proximity indicator may be a relative or absolute distance.

Yet further, the wireless power transmitter may utilise a third technique to detect an external power transmitter: Foreign Object Detection (FOD). For this purpose, the transmitter control unit 20 may be further configured to determine a foreign object loss indicative of the difference in power transmitted by the wireless power transmitter and power received by one or more wireless power receivers. Various methods exist to determine a foreign object loss and the wireless power transmitter 5 may utilise any of these.

As an example of a method for determining a foreign object loss, the wireless power transmitter may comprise a second transmitter communication unit configured for obtaining one or more wirelessly transmitted status messages, where each status message is sent by a wireless power receiver and comprises data on a received power level. The second transmitter communication unit may be the same as the first transmitter communication unit 15 or a different communication unit. Thus, the transmitter communication unit 15 may be configured to receive status messages comprising data on a received power level. The status messages may be sent by one or more wireless power receivers and may be sent via e.g. radio, Bluetooth, or other suitable wireless communication protocols. The wireless power transmitter 5 may use the received status messages to determine a total received power based on the obtained data on received power levels, i.e. to determine a measure of how much received power has been received, for example in a given time interval. In addition, the transmitter control unit may determine a transmitted power level, where the transmitted power level is the level of wireless power transmitted by the wireless power transmitter itself. The determined transmitted power level may be compared to the determined total received power to arrive at a determination of whether a foreign object, such as an external wireless power transmitter, is receiving power from the wireless power transmitter. The skilled person will know of various procedures for making foreign object determinations as such are known in foreign object detection. For example, the determination of the foreign object loss may be made by a simple subtraction of the total received power from the transmitted power level. The wireless power transmitter may determine a foreign object loss by comparing the total received power with the transmitted power level, for example such that e.g. a positive foreign object loss means that the transmitted power level is greater than the total received power indicating power being received by an unknown device, such as e.g. an external wireless power transmitter. The foreign object loss may then be evaluated with respect to predetermined thresholds. For example, the wireless power transmitter may conclude or determine based on the foreign object loss that no foreign objects are absorbing power transmitted by the wireless power transmitter and continue its current operation. However, if the foreign object loss indicates that more power is being output than is being reported received, the wireless power transmitter may be configured to conclude that one or more foreign objects are absorbing power transmitted by the wireless power transmitter.

As another example of a method for foreign object detection, the wireless power transmitter 5 may be configured for Foreign Object Detection based on time-synchronisation of FOD time periods with power receivers. For this purpose, the transmitter control unit 20 is configured to obtaining one or more measurements on power harvested from the wireless power transmitter as part of Foreign Object Detection and to do so during one or more FOD time periods. By presuming that associated wireless power receivers do not harvest power or have substantially reduced power harvesting, e.g.to only harvest a small trickle charge, during the FOD time periods, the transmitter control unit can expect that power harvested during the FOD time periods is due to a Foreign Object. Thus, the charger may for example measure total power and subtract known losses from within the charger itself as well as subtract estimated transmitter losses to arrive at an estimate of power consumed by Foreign Objects. In order to not trigger a Foreign Object response to only a small power excess, i.e. power not accounted for which may be due to e.g. measurement uncertainties and/or trickle charging, the transmitter control unit may compare the estimated power excess with a predetermined FOD threshold. The wireless power transmitter may be configured to only react to an estimated power excess if it exceeds the predetermined FOD threshold. Alternatively, or additionally, the transmitter control unit may calculate rolling averages, and may compare these against one or more thresholds.

The wireless power transmitter may be configured to additionally make one or more measurements on power harvested from it at times outside of the FOD time periods, i.e.to make measurements on power harvested at times where associated power receivers may harvest power. By doing so the wireless power transmitter can compare the power harvest measurements made during and outside of the FOD time periods and make determinations as to the presence of objects charging from it. If the estimated power excess increases during FOD time periods and decreases outside of FOD time periods, the wireless power transmitter may determine that one or more associated power receivers are charging from it. If the power excess estimated from measurements done during and outside of FOD time periods are similar, the wireless power transmitter may determine that only Foreign Objects, or nothing, is harvesting power from it.

To time-synchronise with associated power receivers, the wireless power transmitter transmits a signal indicating a synchronisation time. The synchronisation signal may be a radio signal, for example Bluetooth or other suitable wireless communication protocol. A synchronisation radio signal may be sent by the transmitter communication unit 15 and may be sent as a broadcasted data stream. The time of transmission of the radio signal may be the synchronisation time. Alternatively, or additionally, the wireless power transfer signal may comprise a transmitter charging field signature which indicates the synchronisation time to a wireless power receiver that receives the wireless power transfer signal. Thus, the time-synchronisation may be based in the charging field signature. For example, the time-synchronisation may be based on periodic blanking time periods.

In response to a determination that one or more foreign objects may be absorbing power transmitted by the wireless power transmitter, the wireless power transmitter may take steps to prevent heating up of any foreign objects receiving power. For example, the wireless power transmitter may in response reduce the output of power to reduce the amount of power a foreign object can receive, or the wireless power transmitter may stop outputting power.

When reducing the output of power, the wireless power transmitter may output what can be referred to as a trickle charge. The wireless power transmitter may be configured to output a relatively low amount of power as long as the amount of output power exceeds a predetermined minimum which may be determined by operating parameters and design of the power transmitter. The wireless power transmitter may be further configured to allow for a small amount of power, such as a trickle charge, to be drawn from it, for example even without the wireless power transmitter receiving any status messages. This, together with a suitably set predetermined threshold, will allow for charging of a wireless power receiver that is unable to conform to the FOD method, such as to time-synchronise charging and/or to send a status message, due to the wireless power receiver not having enough power to do so, i.e. due to a "dead" battery. Thus, the wireless power transmitter can provide a small charging power to a wireless power receiver that is in a state of substantially zero or very little power in which the wireless power receiver would not be able to transmit a status message and/or to regulate its charging according to a synchronisation schedule.

The wireless power transmitter may be configured to take steps in response to the first and/or second proximity indicator and/or the foreign object loss. For example, the transmitter control unit may be configured to shut down power transmission or to reduce the current generated by it in the transmitter coil in response to the transmitter control unit detecting one or more indications that an external charger is too close, such as within an allowed predetermined proximity. Additionally, or alternatively, the wireless power transmitter may be configured to start a timer in response to any proximity indicator indicating the proximity of an external wireless power transmitter or in response to a determined foreign object loss. Such a timer may be different, e.g. of different duration, depending on which event triggered it, e.g. whether it was started in response to the first proximity indicator, second proximity indicator, or a determined foreign object loss.

The wireless power transmitter may be configured to transmit a wireless power transfer signal using radio frequencies that are designated for ISM applications, i.e. to use an ISM band. The wireless power transmitter may be configured to transmit a wireless power transfer signal having a centre frequency in the frequency range 100 kHz - 50 MHz. For example, the wireless power transmitter may be configured to transmit a wireless power transfer signal having a centre frequency in the frequency range 15 - 50 MHz, such as 18 - 45 MHz, such as 21 - 40 MHz, such as 25 - 35 MHz. In some embodiments, the wireless power transmitter is configured to transmit a wireless power transfer signal having a centre frequency in the frequency range 100 kHz - 200 kHz. In some embodiments, the wireless power transmitter is configured to transmit a wireless power transfer signal having a centre frequency in the frequency range 5 MHz - 8.5 MHz. In some embodiments, the wireless power transmitter is configured to transmit a wireless power transfer signal having a centre frequency in the frequency range 12 MHz - 15 MHz. The wireless power transmitter may be configured for transmission of wireless power transfer signals at more than one frequency. In some embodiments, the wireless power transmitter is configured to transmit a wireless power transfer signal having a centre frequency in an ISM band comprising 140 kHz, and/or an ISM band comprising 6.78 MHz, and/or an ISM band comprising 13.56 MHz, and/or an ISM band comprising 27.12 MHz, where, for a given centre frequency, the wireless power transfer signal may be configured to comply with a regulated bandwidth of an ISM band comprising the given centre frequency. For example, the wireless power transmitter may be configured to transmit a wireless power transfer signal having a centre frequency centred at or near 140 kHz, and/or centred at or near 6.78 MHz, and/or centred at or near 13.56 MHz, and/or centred at or near 27.12 MHz, where, for a given centre frequency, the wireless power transfer signal may be configured to comply with a regulated bandwidth of an ISM band comprising the given centre frequency. By using frequencies for charging that are higher than those used in the 13.56 MHz RFID band, a wireless power receiver configured for use with the wireless power transmitter may be designed to use its receiver coil(s) for both charging and RFID tag communication, while having the default state of its coil control system be charging so as to allow charging of the wireless power receiver from a low or zero power state, i.e. from a substantially "dead" battery (where any active control may not be possible).

FIG. 2 shows a schematic block diagram of a wireless power receiver 105 in the form of a toy construction element according to some embodiments;

The wireless power receiver construction element 105 may be interactive, i.e. may be responsive to input e.g. from a user. The wireless power receiver of fig. 2 is shaped as an orthogonal polyhedron with flat side faces and having coupling members 110, 110' extending out of or into two of its outer surfaces, respectively. In the example of fig. 2, the wireless power receiver has coupling members which may be referred to as coupling pegs 110 extending from a surface, and other coupling members extending into it, such as peg-receiving recesses 110', from the side opposing the one having coupling pegs 110, as known from prior art, see FIGS. 3-5. The wireless power receiver could alternatively have another shape and/or size, e.g. shapes and sizes as the toy construction elements shown in FIGS. 3-5 or yet other shapes and sizes. In some examples of construction elements, the coupling members may be arranged in planar, regular, parallel grids defining coupling locations. A toy set, for example a toy construction set, may comprise one or more wireless power receivers 105, as disclosed herein. For example, a toy construction set may comprise one or more wireless power receivers 105, as disclosed herein, in the form of construction elements within the toy construction set.

The parts comprising the wireless power receiver 105 and parts comprised in the wireless power receiver 105 are not necessarily shown to scale. The wireless power receiver 105 comprises a first receiver coil 115 and a second receiver coil 115' configured to receive a wireless power transfer signal from a wireless power transmitter, i.e. from a wireless charger. A load 120 is configured to receive power via inductive charging circuitry which receives the electrical signal from the receiver coil(s) and processes it before supplying it to the load, e.g. rectifies, filters and regulates it. The load may comprise e.g. a sensor unit (not shown), a receiver control unit 121, a battery 122, a tag reader circuit 123, a function device (not shown), a receiver communication unit 125, etc. The walls of the wireless power receiver 105 define a housing which accommodates the receiver coils 115, 115' and the load 120.

The receiver control unit 121 may comprise e.g. a microcontroller, a microprocessor, or other suitable processing unit. The receiver control unit 121 may be configured to handle numerous control functions related to the wireless power receiver. For example, the receiver control unit 121 may control the functioning of the receiver coil, a receiver communications unit, etc. At least some functions of the receiver control unit 121 may be implemented in hardware. Implementing some functions of the wireless power receiver in hardware has the advantage that at least some of those functions can be designed to work even when there is too little power, such as too little power in the battery 122, to operate a processing core.

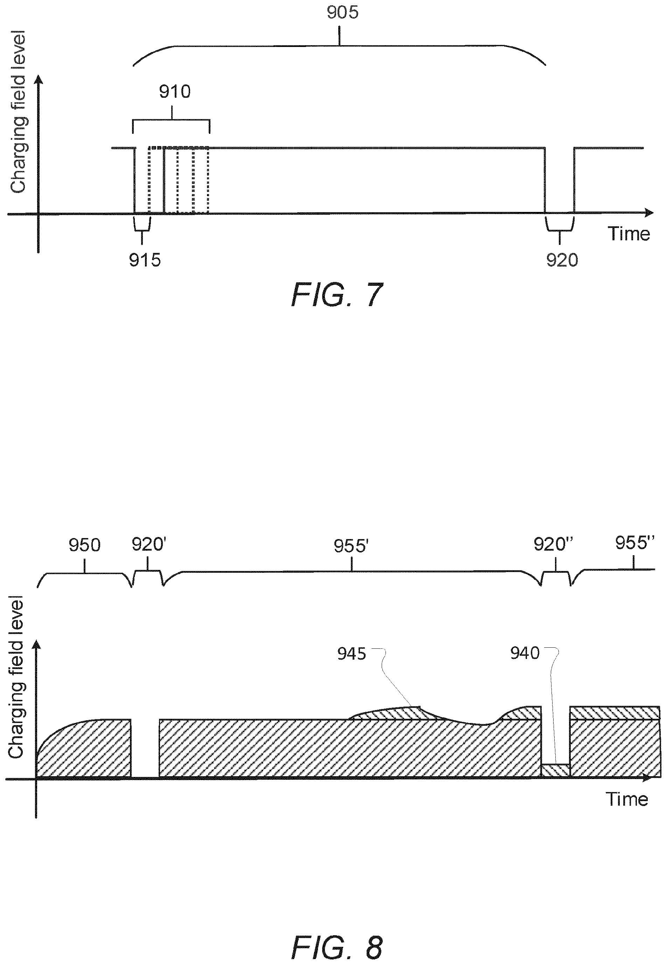

The receiver control unit is configured to determine a received power level, where the received power level is the level of wireless power received by the wireless power receiver 105. The control unit may be further configured to determine a transmitter charging field signature associated with the received power. For example, the transmitter charging field signature may be a measurable characteristic of the wireless power transfer signal, and may comprise a periodic component, i.e. a component in the wireless power transfer signal that appears or occurs at regular intervals. Examples of charging field signatures and selection thereof by a wireless power transmitter are described in connection with fig. 7. The wireless power receiver 105 further comprises a receiver communication unit 125, such as a transceiver.

The wireless power receiver may be configured to facilitate the wireless power transmitter in foreign object detection, for example by any of known methods of foreign object detection, or by any of the methods of foreign object detection as described herein. More than one method of foreign object detection may be utilised.

In some embodiments, the wireless power receiver may be configured for a foreign object detection method, which comprises the receiver sending status messages. The receiver communication unit is then configured to send a status message comprising the received power level and, optionally, the charging field signature associated with the received power. Thus, the wireless power receiver determines how much power it receives and, optionally, the charging field signature associated with the received power. It then sends a status message containing the determined information. A wireless power transmitter as described herein may then receive the status message and use it in its determination of the total received power. If the charging field signature comprises a charging field signature associated with a received power, the wireless power transmitter may be configured to determine whether the associated charging field signature matches its own charging field signature, and if so it can add the reported received power level to the total received power being determined by it. On the other hand, if the charging field signature associated with a received power does not match the charging field signature of the wireless power transmitter, the wireless power transmitter can ignore the received power level reported in the status message with respect to its determination of the total received power. The wireless power transmitter may, however, save the information on the associated charging field signature for later, e.g. in case the wireless power transmitter wishes to change its own charging field signature.

In some embodiments, the wireless power receiver may be configured for a foreign object detection method, which relies on a time synchronisation between a wireless power transmitter and one or more power receivers. A synchronisation signal indicating a synchronisation time is transmitted by the wireless power transmitter and received by wireless power receivers which coordinate their power harvesting based on the detected synchronisation time. The receiver control unit 121 is configured to determine a synchronisation time based on a signal received from a wireless power transmitter. The signal may be a radio signal received by the receiver communication unit 121 or it may be indicated by a charging field signature of the wireless power transfer signal from a wireless power transmitter. Thus, the receiver control unit may be configured to determine a transmitter charging field signature. For example, the transmitter charging field signature may be a measurable characteristic of the wireless power transfer signal, and may comprise a periodic component, i.e. a component in the wireless power transfer signal that appears or occurs at regular intervals. Thus, the synchronisation time may be indicated by the occurrence of a periodic component in the wireless power transfer signal. The synchronisation signal from a wireless power transmitter allows for time-synchronisation between the power transmitter and the power receiver.

The receiver control unit 121 is further configured to reduce or substantially nullify, i.e. cancel, power harvesting during one or more FOD time periods occurring at predetermined time intervals relative to the synchronisation time. Once the wireless power receiver has determined the synchronisation time, the FOD time periods are predetermined, i.e. defined beforehand. Thus, the wireless power receiver time-aligns its power harvesting to a timing that is dependent on a timing provided by the wireless power transmitter. The power receiver may be configured to charge whenever able, while adhering to the scheduled FOD time periods such that the wireless power transmitter can perform a FOD as described herein.

The receiver communication unit may further be configured for communication, such as radio-frequency communication, with other wireless power receivers 105. The wireless power transmitter 5 disclosed herein may be configured to exclusively receive, i.e. not be able to transmit, messages using the communications protocol on which the status messages are transmitted by the wireless power receiver 105. For example, by being configured to receive the status messages as broadcasted data streams. The wireless power receiver 105 may be configured to send status messages via a broadcasting system, i.e. a system allowing for transmitting and receiving data without pairing between communicating devices. The wireless power receiver may be configured to use the same communication protocol for communication with other wireless power receivers and for sending of status messages.

The wireless power receiver may be configured to receive power from a wireless power transfer signal using radio frequencies that are designated for ISM applications, i.e. using an ISM band. The wireless power receiver may be configured to receive, and charge from, a wireless power transfer signal having a centre frequency in the frequency range 100 kHz - 50 MHz. For example, the wireless power receiver may be configured to receive, and charge from, a wireless power transfer signal having a centre frequency in the frequency range 15 - 50 MHz, such as 18 - 45 MHz, such as 21 - 40 MHz, such as 25 - 35 MHz. In some embodiments, the wireless power receiver is configured to receive power from a wireless power transfer signal having a centre frequency in the frequency range 100 kHz - 200 kHz. In some embodiments, the wireless power receiver is configured to receive power from a wireless power transfer signal having a centre frequency in the frequency range 5 MHz - 8.5 MHz. In some embodiments, the wireless power receiver is configured to receive power from a wireless power transfer signal having a centre frequency in the frequency range 12 MHz - 15 MHz. The wireless power receiver may be configured to charge from more than one centre frequency of a wireless power transfer signal, each at a different time. In some embodiments, the wireless power receiver is configured to receive a wireless power transfer signal having a centre frequency in an ISM band comprising 140 kHz, and/or an ISM band comprising 6.78 MHz, and/or an ISM band comprising 13.56 MHz, and/or an ISM band comprising 27.12 MHz, where, for a given centre frequency, the wireless power transfer signal may be configured to comply with a regulated bandwidth of an ISM band comprising the given centre frequency. For example, the wireless power receiver may be configured to receive power from a wireless power transfer signal having a centre frequency centred at or near 140 kHz, and/or centred at or near 6.78 MHz, and/or centred at or near 13.56 MHz, and/or centred at or near 27.12 MHz, where, for a given centre frequency, the wireless power transfer signal may be configured to comply with a regulated bandwidth of an ISM band comprising the given centre frequency. The wireless power receiver may be configured to be able to receive power from a wireless power transfer signal comprising radio frequencies that are higher than those used in the 13.56 MHz RFID band. The wireless power receiver may further comprise an NFC/RFID tag reader. By using frequencies for charging that are higher than those used in the 13.56 MHz RFID band, the wireless power receiver may be configured to use its receiver coil(s) 115,115' for both charging and RFID tag communication, while having the default state of the coil control system (which may be part of the control unit 121) of the wireless power receiver be charging so as to allow charging of the wireless power receiver from a low or zero power state, i.e. from a substantially "dead" battery (where any active control may not be possible).

The wireless power receiver may be configured to bar, i.e. not permit, charging from a charging field that does not have a charging field signature. For example, the receiver control unit 121 may be configured to put the wireless power receiver in a state in which wireless power received is not stored or used, if the control unit cannot determine a charging field signature associated with the wireless power.

In some embodiments, the wireless power receiver is configured to receive power even when the power received is relatively low power, such as e.g. a "trickle" charge. This may allow the wireless power receiver to be able to receive power even at a distance from a charging surface of a wireless power transmitter.

The wireless power receiver 105 may further comprise a tag reader circuit 123, and be configured to read from, and possibly write to, a tag using its receiver coil(s) 115, 115'. Using the receiver coil(s) 115, 115' in this manner allows for the tag reader circuit 123 to read data from a tag in a contactless manner. The control unit 121 of the wireless power receiver may be configured to control a function device responsive to configuration data read from a tag. Additionally, or alternatively, the control unit 121 may be further configured to control a function device responsive to an input from a sensor comprised in the wireless power receiver. The tag reader may be an RFID/NFC reader or any other circuitry for reading data from a tag that is positioned in sufficient proximity of one or more receiver coil(s) 115, 115'.

The wireless power receiver 105 may comprise an energy storage device 122, such as a rechargeable battery, a capacitor, e.g. a large capacitor, or other power source, that is suitable for providing power to elements in the wireless power receiver such as e.g. the receiver control unit, a function device, and other parts requiring power.

The wireless power receiver 105 may comprise a function device (not shown) which may be any suitable device for performing a function that provides a user-perceptible effect, such as a visible, audible, and/or haptic effect. A toy set, for example a toy construction set, may comprise several of the wireless power receiver 105 e.g. in the form of construction elements, and each wireless power receiver construction element may have a function device. For example, each wireless power receiver construction element may comprise a function device that provides a user-perceptible effect that is different from or similar to the user-perceptible effect produced by the function devices in other wireless power receiver construction elements of the toy construction set.

The wireless power receiver 105 may comprise a sensor (not shown) which may be e.g. a light sensor, e.g. including a light-sensitive diode. Other examples of a sensor comprised in a wireless power receiver include a microphone, an accelerometer, a gyro, a linear or rotation encoder, a proximity sensor, and/or the like. The control unit 121 may be operable to control the behaviour of the wireless power receiver 105 responsive to input from the sensor. For example, if the function device comprises a motor, the control unit may control the speed of the motor responsive to sensed light intensity by a light sensor. The specific behaviour, i.e. the specific way of reacting to different sensor inputs, may be configured by received configuration data, e.g. from one or more tags, or other.

FIG. 3 shows a toy construction element with coupling pegs on its top surface and a cavity extending into the brick, i.e. the toy construction element, from the bottom. The cavity has a central tube, and coupling pegs on another brick can be received in the cavity in a frictional engagement as disclosed in US 3 005 282. FIGS. 4 and 5 show other such prior art construction elements. Construction elements shown in the remaining figures are shown with this known type of coupling members in the form of cooperating pegs and cavities. However, other types of coupling members may also be used in addition to or instead of the cooperating pegs and cavities. The coupling pegs are arranged in a square planar grid, i.e. defining orthogonal directions along which sequences of coupling pegs are arranged. The distance between neighbouring coupling pegs is uniform and equal in both directions. This, or similar arrangements of coupling members at coupling locations defining a regular planar grid, allow the toy construction elements to be interconnected in a discrete number of positions and orientations relative to each other, in particular at right angles with respect to each other. The toy construction elements shown here, in FIGS. 3-5, may be interactive construction elements as described in connection with FIG. 2 or may be of the passive type, i.e. without additional functionality beyond mechanical model building.

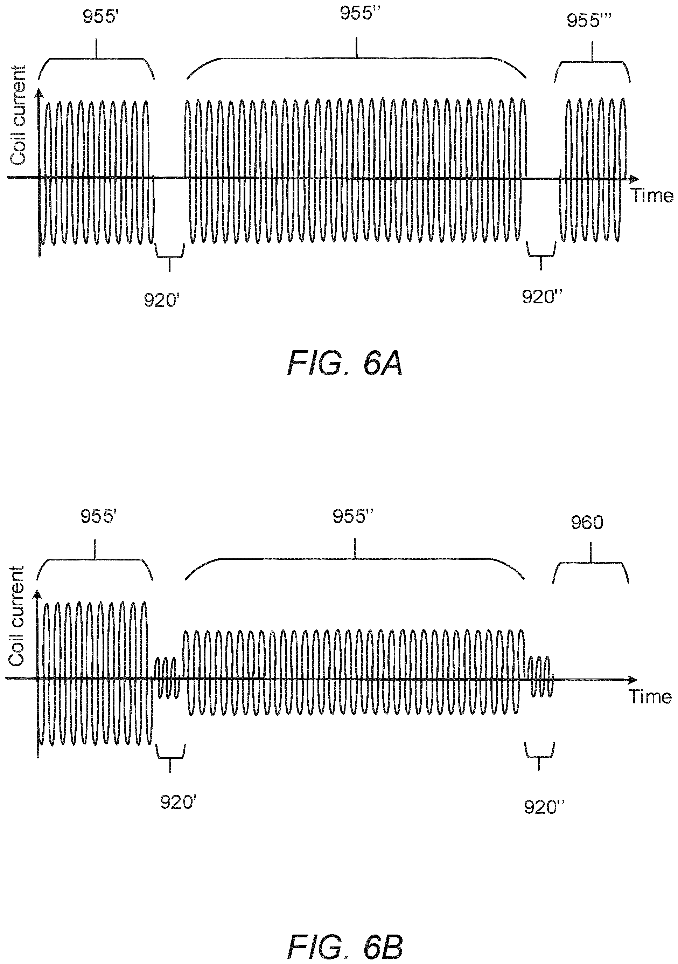

FIGS. 6A and 6B show illustrative plots of coil current amplitude during power-transmission modes and blanking-period modes according to some embodiments.

In fig. 6A is shown an illustrative plot of a measured coil current amplitude versus time for a normal operation of a wireless power transmitter. The transmitter control unit in the wireless power transmitter regulates the current in the transmitter coil. The operation of the wireless power transmitter is defined by modes of operation, specifically a power-transmission mode of operation and a blanking-period mode of operation. During the power-transmission mode an alternating current is generated in the transmitter coil, whereas substantially no current is generated during the blanking-period mode of operation, as illustrated.

The wireless power transmitter is in the blanking-period mode for a time period referred to as the blanking time period 920, and in the power-transmission mode for a time period referred to as the transmission time period 955. The plot illustrates a period of time during which the wireless power transmitter is in the power transmission mode three times: during the first 955', second 955", and third transmission time period 955'''. In-between being in the power transmission mode, the wireless power transmitter is in a first blanking time period 920' and a second blanking time period 920". Each of the blanking time periods 920', 920" may be shorter than any of the transmission time periods such that more time is spent transmitting power to one or more wireless power receivers.

In addition to the blanking time periods providing an opportunity for the wireless power transmitter to evaluate indications of an external magnetic field, while no current is generated in the transmitter coil, the blanking time periods may also be utilised as charging field signatures as described elsewhere herein.

Fig. 6B shows a similar plot to that shown in fig. 6A. However, as can be seen in the plot the measured current in the transmitter coil is not substantially zero during the first blanking time period 920'. Since no current is generated by the transmitter control unit during a blanking-period mode of operation, the current measured during that time must have another origin. Further, the current in the transmitter coil during the first blanking time period 920' is an alternating current which indicates that an external magnetic field is affecting the transmitter coil and causing the alternating current therein. In response, the transmitter control unit of the wireless power transmitter reduces the current it generates in the transmitter coil during the second transmission time period 955". However, an alternating current is again present in the transmitter coil during the second blanking time period 920", and in response to this the transmitter control unit initiates a shutdown 960 of the charging field. In particular, the presence of a steady, alternating current in the transmitter coil during a blanking-period mode is a strong indication to the transmitter control unit that an external magnetic field is detected.

FIG. 7 illustrates a charging field level of a wireless power transmitter according to some embodiments.

In fig. 7 is shown an illustrative graph of the charging field level, i.e. a measure of output power, from a wireless power transmitter as disclosed herein, the charging field level being shown as a function of time. The charging field level is shown as having a substantially constant level in the course of a normal operation except during a blanking time period 920 in which the charging field level is reduced to substantially zero during the blanking time period.

The wireless power transmitter may select the blanking time period 920, for example at, or prior to, start-up or in response to an event occurring during operation of the wireless power transmitter. The wireless power transmitter may be configured to select from a list of available blanking time periods. In the example shown in fig. 7, a maximum blanking time period 910 available to the wireless power transmitter is shown with divisions into a number of possible time lengths that are each a multiple of a minimum blanking time period 915, the divisions being shown as dotted lines. In fig. 7 shown as five divisions, but a different number of divisions is also possible. The wireless power transmitter used for the example in fig. 7 has a charging field signature identified by a blanking time period 920 of twice the minimum blanking time period 915 as shown by the full line showing the charging field level versus the dotted line showing the division of the maximum blanking period 910. A repetition period 905 is shown defined in fig. 7 from the beginning of a blanking time period and until the beginning of the next blanking time period, but may be defined in other ways. Within the repetition period then, the charging field level is reduced to substantially zero for a period of time, the blanking time period, and for the rest of the repetition period the charging field level is at a substantially constant level as the wireless power transmitter is in the power-transmission mode. Thus, in this embodiment, the transmission time period is defined by the repetition period 905 and the blanking time period 920.

As an example, the repetition period may be 5 seconds and the minimum blanking time period may be 150 ms (milliseconds). To continue with this example as shown in fig. 7, the wireless power transmitter may then have e.g. five possible blanking time periods to choose from: 150 ms, 300 ms, 450 ms, 600 ms, and 750 ms (milliseconds). Alternative, or additionally, the length of the repetition period may be selected by a wireless power transmitter, for example as part of its selection of a charging field signature.

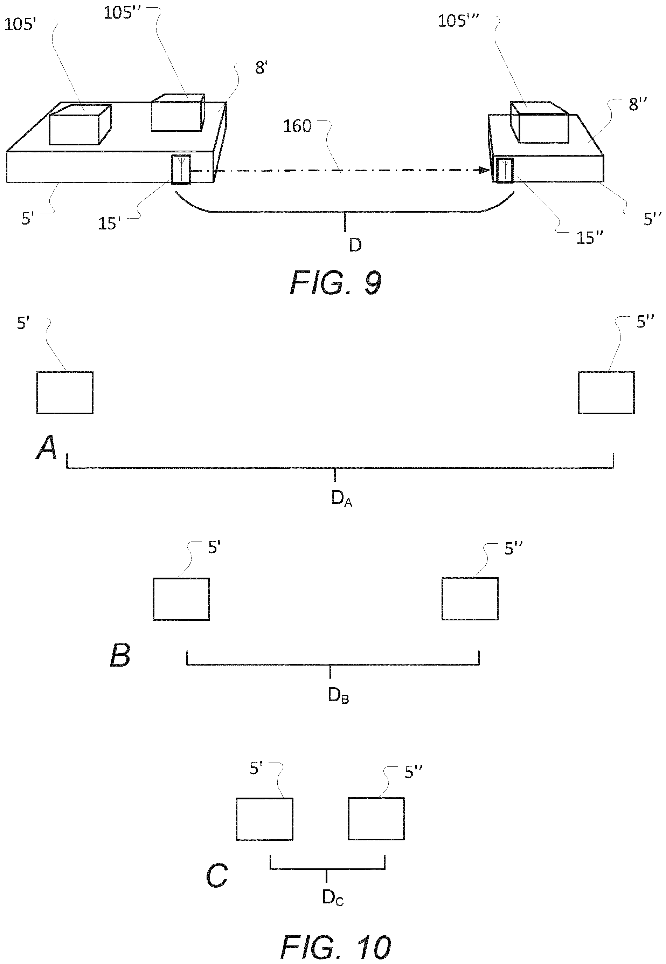

As described below in connection with fig. 9, a wireless power transmitter may be configured to select a charging field signature at specific events, such as e.g. start-up or in case the determined total received power indicates a conflict with another wireless power transmitter. In the latter case, the wireless power transmitter may be configured to select a different charging field signature than the one it had when the conflict occurred. Selecting a charging field signature means that the wireless power transmitter selects one or more of: a blanking time period, a transmission time period, a repetition period. A wireless power transmitter may be configured to select a charging field signature intermittently, e.g. at random times and/or at predetermined time intervals and/or at one or more fixed times. A wireless power transmitter may be configured to select a charging field signature based on associated charging field signatures in obtained status messages; Advantageously, the wireless power transmitter may then select a charging field signature that does not appear in any of the obtained status messages. A wireless power transmitter may be configured such that whenever a transmitter charging signature is to be selected, the wireless power transmitter selects a charging field signature of the available charging field signatures that provides a more efficient charging. For example, if the charging field signature is a blanking time period as described here, the wireless power transmitter may be configured to select a charging field signature with as short a blanking time period as possible if this provides more time wherein the wireless power transmitter provides charging power. Thus, the wireless power transmitter may be configured to select a transmitter charging signature which allows the wireless power transmitter to provide charging for as much time as possible on average. A wireless power receiver may detect one or more characteristics of the wireless power transfer signal while receiving power from a wireless power transmitter, and determine a charging field signature and/or a synchronisation time from this. The wireless power receiver may then transmit a status message comprising data on a received power level and the charging field signature associated with the received power.

In some jurisdictions it may be important that the charging field signature be configured in such a way that it will not provide communication at radio wavelengths that may fall within the regulations of radio communication. The charging field signature is meant to act as an identifiable signature of the charging field produced by a wireless power transmitter that may be used as part of a toy set.

FIG. 8 illustrates a charging field level of a wireless power transmitter during power-transmission modes and blanking-period modes according to some embodiments. The graphs in fig. 8 of the charging field level is similar to the illustrative graph shown in fig. 7.

In fig. 8 the wireless power transmitter initialises the charging field during the initialisation time period 950, whereby the charging field is brought up to a desired level from a state of shutdown. During a first blanking time period 920' and during first half of the first transmission time period 955', the charging field level is within normal operating parameters, that is to say there may be variations in the charging field level, but these are within allowed tolerances. However, during the second half of the first transmission time period 955', significant variations 945 in the charging field level occur which may be indicative of an external magnetic field affecting the charging field of the wireless power transmitter. Excess charging field level 940 is also seen during the second blanking time period 920". However, unlike in the example illustrated in fig. 6B, the wireless power transmitter has not responded based on the variations 945 and excess 940 and continues to provide wireless power at the same level during the second transmission time period 955". It may be that the wireless power transmitter will respond at a later time, or that the variations 945 and excess 940 are each determined to be below a threshold value such that the wireless power transmitter will continue its operation, at least for the time being.

FIG. 9 illustrates two wireless power transmitters according to some embodiments.

A first wireless power transmitter 5' has a first 105' and a second wireless power receiver 105" positioned on the its charging surface 8' and the two wireless power receivers may be harvesting power from a charging field generated by the first wireless power transmitter.

In fig. 9 is shown a first wireless power transmitter 5', i.e. a first charger, and a second wireless power transmitter 5", i.e. a second charger, seen in a perspective view from a side and slightly above the charging surfaces 8', 8" of the chargers 5', 5". On the charging surface 8' of the first charger 5' is placed a first wireless power receiver 105' and a second wireless power receiver 105". On the charging surface 8" of the second charger 5" is placed a third wireless power receiver 105'''. The wireless power transmitters 5', 5" and the wireless power receivers 105', 105", 105‴ may be wireless power transmitters and wireless power receivers as disclosed herein.

The chargers 5, 5" and the wireless power receivers 105, 105", 105‴ may be part of one or more toy sets. The first and second charger may have different sizes and/or different functionality. For example, the second charger 5" may be smaller than the first charger 5, as shown, and may only be large enough to accommodate a single one of the wireless power receivers on its charging surface 8". The second charger 5" may be part of a toy set comprising the second charger 5" and a single one of the wireless power receivers 105, 105", 105'". The first charger 5 may then, for example, be part of a toy set comprising the first charger 5 and the two wireless power receivers 105, 105" on it. Each of the wireless power transmitters 5, 5" may be configured such that it need not communicate directly, e.g. to pair or the like, with any of the wireless power receivers 105, 105", 105‴ in order to allow charging from it, and so a wireless power receivers 105, 105", 105‴ may charge using any of the wireless power transmitters 5, 5", also regardless of whether they are part of the same toy set or not.

Each wireless power transmitter may be configured to have one or more safety measures, whereby it may determine whether another wireless power transmitter is within a predetermined allowed proximity and in particular, whether another wireless power transmitter is too close to it for safety reasons.

As a first safety measure, the wireless power transmitter is configured to have a power-transmission mode of operation and a blanking-period mode of operation, and a transmitter control unit within the wireless power transmitter is configured to switch between the power-transmission mode of operation and the blanking-period mode of operation. Further, each wireless power transmitters is configured to determine a first proximity indicator which is indicative of a detection of an external magnetic field, such as an external charging field. By being configured to detect an external magnetic field as described herein, the wireless power transmitters may detect another, external, wireless power transmitter when that other power transmitter is in the power-transmission mode of operation as described herein.

As a second safety measure, each wireless power transmitter may comprise a first transmitter communication unit 15 configured for sending and receiving a wireless signal and each wireless power transmitter is configured to determine a signal strength indicator indicative of the signal strength of a received signal from an external wireless power transmitter. Fig. 9 is a partially transparent view as a first transmitter communication unit 15', 15" comprised within a housing of each of the wireless power transmitters 5, 5" is shown. The first transmitter communication unit 15' comprised in the first wireless power transmitter 5' may send a wireless signal 160, illustrated by the dash-dotted line, to the first transmitter communication unit 15" comprised in the second wireless power transmitter 5" and vice versa.

The transmitter control unit within the second wireless power transmitter may determine a signal strength indicator indicative of the signal strength of the wireless signal 160 received from the first wireless power transmitter. From the determined signal strength indicator, the transmitter control unit within the second wireless power transmitter can determine a second proximity indicator indicative of the proximity of the first wireless power transmitter and it does so based on the signal strength indicator.

The first and second wireless power transmitter may send a signal to each other via their transmitter communication units, and each may determine a strength of the signal upon arrival at the transmitter communication unit. Using well-known methods, the distance D from one transmitter communication unit to the other may be estimated from the signal strength of the received signal. The received signal strength and/or the estimated distance may be evaluated against one or more predetermined threshold levels in order for the transmitter control unit to determine whether the other wireless power receiver is too close.

As a third safety measure, the wireless power transmitters may comprise a foreign object detection system according to any known method of foreign object detection, or as described herein.

Each of the wireless power receivers 105', 105", 105‴ may also comprise a communication unit (not shown) with which the wireless power receivers can broadcast messages, such as status messages. A broadcast system allows for reception of data without pairing between communicating devices. The wireless power transmitters may be able to receive the broadcasted messages using the transmitter communication units 15', 15" comprised within them or the wireless power transmitters may comprise another communication unit (not shown) which is configured to receive the broadcasted messages.

In some embodiments, the wireless power transfer system comprising a wireless power transmitter and one or more associated wireless power receivers is configured for a foreign object detection method, which comprises the receiver sending status messages. The status messages comprise data on the amount of power being received by the respective wireless power receiver, i.e. of a received power level. Both wireless power transmitters 5', 5" may be configured to use the obtained data on received power level to determine the amount of power being received from it by wireless power receivers. However, the wireless power transmitter needs to be able to distinguish, which status message(s) is/are providing information on power that is actually received from itself as it may receive status messages from wireless power receivers that are harvesting energy from another wireless power transmitter. For example, the first wireless power transmitter 5' may be able to receive broadcasted status messages from the third wireless power receiver 105‴ which is charging on the second wireless power transmitter 5". The wireless power transmitter may be configured to resolve this by also obtaining data on a charging field signature associated with the reported received power level. Thus, each status message sent by a wireless power receiver may also comprise data on an associated charging field signature, and each wireless power transmitter can restrict its determination of the total power received from it to be based on each report on a received power level for which its own charging field signature matches the one reported together with the received power level. Based on a total received power determined from the obtained received power level and a determined transmitted power level which is the level of wireless power transmitted by the wireless power transmitter, a wireless power transmitter may determine a foreign object loss as known in foreign object detection.

If the foreign object loss indicates that more power has been received than transmitted by the wireless power transmitter, the wireless power transmitter may be configured to reset its transmitter charging field signature. This may for example occur when the communication range of the wireless communication protocol used to send the status messages is longer than the effective charging range of the wireless power transfer signal and multiple wireless power transmitters are using the same charging field signature. By listening to messages, such as e.g. status messages, from wireless power receivers, a wireless power transmitter can reason out the presence of other wireless power transmitters without communicating directly with them, thereby allowing them to act accordingly for example with respect to selection of a transmitter charging field signature.

In some embodiments, the wireless power transfer system comprising a wireless power transmitter and one or more associated wireless power receivers is configured for a foreign object detection method, which relies on a time synchronisation between the wireless power transmitter and one or more power receivers. A synchronisation signal indicating a synchronisation time is transmitted by a wireless power transmitter 5', 5" and received by wireless power receivers 105', 105", 105‴ which each coordinate their power harvesting based on the detected synchronisation time. A receiver control unit 121 in each wireless power receiver is configured to determine a synchronisation time based on a signal received from a wireless power transmitter. The signal may be a radio signal received by the receiver communication unit 121 or it may be indicated by a charging field signature of the wireless power transfer signal from a wireless power transmitter. The transmitter charging field signature may be a measurable characteristic of the wireless power transfer signal, and may comprise a periodic component, i.e. a component in the wireless power transfer signal that appears or occurs at regular intervals. The synchronisation signal from a wireless power transmitter allows for time-synchronisation between the power transmitter and the power receiver.

The receiver control unit 121 is further configured to reduce or substantially nullify, i.e. cancel, power harvesting during one or more FOD time periods occurring at predetermined time intervals relative to the synchronisation time. Once the wireless power receiver has determined the synchronisation time, the FOD time periods are predetermined, i.e. defined beforehand. Thus, the wireless power receiver time-aligns its power harvesting to a timing that is dependent on a timing provided by the wireless power transmitter. The power receiver may be configured to charge whenever able, while adhering to the scheduled FOD time periods such that the wireless power transmitter can perform a FOD as described herein.

The wireless power transmitter may be configured to select the transmitter charging field signature upon start-up. The transmitter charging field signature may be selected from a predetermined set of possible charging field signatures and/or the transmitter charging field signature may be selected after a period of time, for example after a period of time wherein the wireless power transmitter has listened for messages, such as broadcasted messages, e.g. status messages, reporting charging field signatures already in use. Thus, the wireless power transmitter may be configured to have a predetermined set of charging field signatures from which it may choose a charging field signature. In addition, or alternatively, the wireless power transmitter may wait for a predetermined period of time during which it may be configured to not generate a charging field, and if the wireless power transmitter receives any messages, such as status messages, in that time, it may decide not to use a charging field signature reported in those messages. In this way, the wireless power transmitter may try to avoid choosing a charging field signature that is already in use by another wireless power transmitter within range of the wireless communication used by the wireless power receiver(s) to transmit messages, such as status messages.

The wireless power transmitter may be configured to select a transmitter charging field signature at start-up, and/or when there is a conflict with the charging field signature of another wireless power transmitter, and/or intermittently, e.g. at random times and/or at predetermined time intervals and/or at one or more fixed times. The wireless power transmitter may be configured such that whenever a transmitter charging signature is to be selected, the wireless power transmitter selects a transmitter charging field signature of the available transmitter charging field signatures that provides a more efficient charging. For example, the wireless power transmitter may be configured to select a transmitter charging field signature with as short a blanking time period as possible as this may provide more time wherein the wireless power transmitter provides charging power. Thus, the wireless power transmitter may be configured to select a transmitter charging signature which allows the wireless power transmitter to provide charging for as much time as possible on average.

The three safety measures have strengths and weaknesses and so may complement each other.

FIGS. 10A, 10B, and 10C illustrates two wireless power transmitters according to some embodiments.

The two wireless power transmitters 5', 5" may be wireless power transmitters as described herein, and may be similar to those described in connection with fig. 9. The wireless power transmitters 5', 5" may each be configured to define safety distances between itself and an external wireless power transmitter. For example, a wireless power transmitters 5', 5" may define three safety distances, D_{A}, D_{B}, and D_{C} as illustrated in figs. 10A, 10B, and 10C, respectively.

When an external wireless power transmitter is determined to be at or further away than the first safety distance D_{A}, a wireless power transmitter may be configured to consider the external wireless power transmitter safe with respect to electromagnetic radiation safety levels. For example, the wireless power transmitter may be configured to define a first safety distance D_{A} being at or above e.g. 15 cm, such as at or above 20 cm, such as at or above 30 cm, such as at or above 40 cm, such as at or above 50 cm.

A wireless power transmitter may additionally be configured to consider an external wireless power transmitter unsafe with respect to electromagnetic radiation safety levels, when the external wireless power transmitter is determined to be close to or at a second safety distance D_{B}. For example, the wireless power transmitter may be configured to define a second safety distance D_{B} being at or below e.g. 50 cm, such as at or below 40 cm, such as at or below 30 cm, such as at or below 20 cm, such as at or below 15 cm.

Further, a wireless power transmitter may be configured to consider an external wireless power transmitter dangerous with respect to electromagnetic radiation safety levels, when the external wireless power transmitter is determined to be within a third safety distance D_{C}. For example, the wireless power transmitter may be configured to define a third safety distance D_{C} being at or below e.g. 10 cm, such as at or below 8 cm, such as at or below 7 cm, such as at or below 6 cm, such as at or below 5 cm.

The wireless power transmitter may be configured to respond differently to an external wireless power transmitter depending on the distance which the external wireless power transmitter is determined as being at relative to the wireless power transmitter. For example, the wireless power transmitter may initially respond to an external wireless power transmitter determined to be within the second safety distance D_{B}, but above the third safety distance D_{C}, by reducing the effect of the charging field thereby reducing the combined electromagnetic radiation from the two wireless power transmitters. In contrast, if an external wireless power transmitter determined to be within the third safety distance D_{C}, the wireless power transmitter may immediately respond by shutting down its charging field.

The distance between the wireless power transmitters 5', 5" may be estimated using any method for doing so or a combination of methods. In particular, the second proximity indicator may provide an estimated distance between devices based on the signal strength of a wireless signal. However, this method is known to be sensitive to interference of the signal strength. The detection of an external magnetic field and/or the foreign object detection are more reliable, but have a shorter detection range. Thus, the detection methods described herein may be used in various combinations to minimize the weakness of each, and increase the safety of the wireless power transmitter.

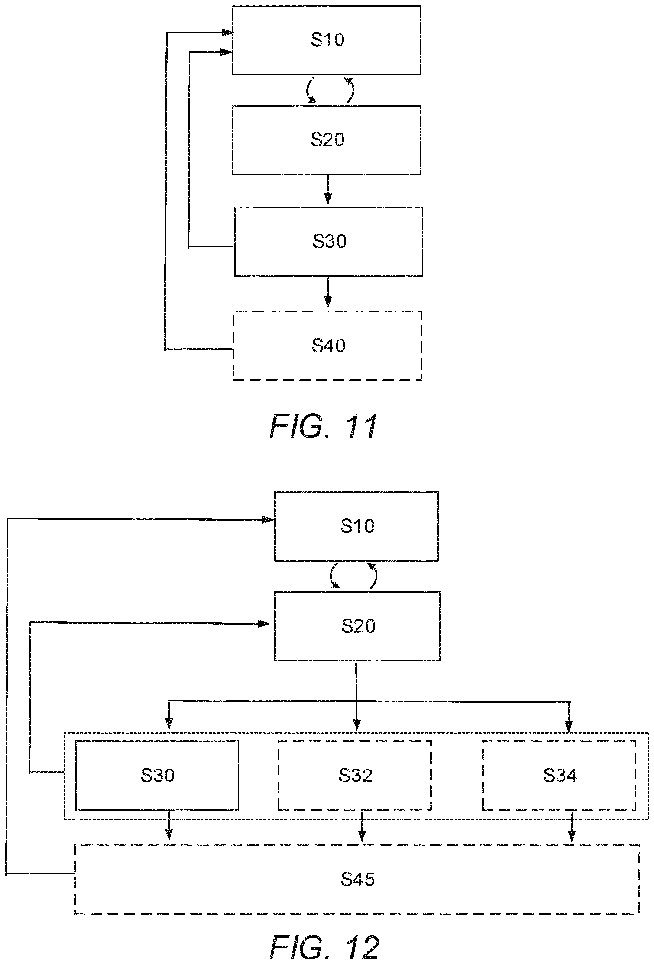

FIG. 11 shows a flow chart of a method of operating a wireless power transmitter comprising a transmitter coil according to some embodiments. The wireless power transmitter may be a power transmitter as described herein.

In step S10, a wireless power transfer signal is transmitted by the wireless power transmitter in a power-transmission mode.

In step S20, the current in the transmitter coil is reduced to substantially zero in a blanking-period mode.

The wireless power transmitter switches between the power-transmission mode and the blanking-period mode.

In step S30, a first proximity indicator indicative of a detection of an external magnetic field is determined. The determination may be made at any time during the operation of the wireless power transmitter. In fig. 11, the determination is shown as taking place after the wireless power transmitter enters the blanking-period mode and the current in the transmitter coil is reduced to substantially zero, but the determination may additionally, or alternatively, be made during the power-transmission mode.

In optional step S40, the transmitter control unit in the wireless power transmitter reduces the current generated by it in the transmitter coil or disables the power-transmission mode of operation, i.e. shuts down the transmission of power, in response to any proximity indicator indicating the proximity of an external wireless power transmitter. If reducing the current in the transmitter coil, the switching between the power-transmission mode of operation and the blanking-period mode of operation may continue.

FIG. 12 shows a flow chart of a method of operating a wireless power transmitter according to some embodiments. The wireless power transmitter may be a power transmitter as described herein. Steps S10-S30 may be as described above in connection with fig. 11.

In optional step S32, a signal strength indicator indicative of the signal strength of a received signal from an external wireless power transmitter is determined, and a second proximity indicator indicative of a proximity of the external wireless power transmitter is determined, the second proximity indicator being based on the signal strength indicator.

In optional step S34, a foreign object loss is determined, the foreign object loss being indicative of the difference in power transmitted by the wireless power transmitter and power received by one or more wireless power receivers.

The determinations of a second proximity indicator and/or the foreign object loss may be made at any time during the operation of the wireless power transmitter. In fig. 12, for ease of illustration, the determinations of the three indicators of an external power transmitter are shown as occurring at the same time.

In optional step S45, the transmitter control unit in the wireless power transmitter reduces the current generated by it in the transmitter coil or shuts down the transmission of power, in response to any proximity indicator indicating the proximity of an external wireless power transmitter or the foreign object loss indicating a foreign object. If reducing the current in the transmitter coil, the switching between the power-transmission mode of operation and the blanking-period mode of operation may continue.

### List of references

- 5: wireless power transmitter
- 7: transmitter encasing/housing
- 8: charging surface
- 10: transmitter coil
- 15: first transmitter communication unit
- 20: transmitter control unit
- 25: inductive charging circuitry
- 30: power adapter
- 35: user interface
- 105: wireless power receiver
- 115: receiver coil
- 120: load
- 121: receiver control unit
- 122: battery
- 123: tag reader circuit
- 125: receiver communication unit
- 160: wireless signal
- 905: repetition period
- 910: maximum blanking time period
- 915: minimum blanking time period
- 920: blanking time period
- 940: excess charging field level
- 945: variation in charging field level
- 950: Initialisation time period
- 955: transmission time period
- 960: shutdown
- D: Distance between chargers

## Claims

1. **A wireless power transmitter** (5) comprising:
- a transmitter coil (10) configured to transmit a wireless power transfer signal, the wireless power transfer signal being transmitted using a magnetic charging field configured for transmission of power, the magnetic charging field being caused by a current in the transmitter coil,
- a transmitter control unit (20) configured to define a power-transmission mode of operation and a blanking-period mode of operation, and configured to switch between the power-transmission mode of operation and the blanking-period mode of operation during normal operation, wherein in the power-transmission mode of operation an alternating current is generated in the transmitter coil by the transmitter control unit and in the blanking-period mode of operation substantially no current is generated in the transmitter coil by the transmitter control unit,
wherein the transmitter control unit is further configured to determine a first proximity indicator which is indicative of a detection of an external magnetic field.

2. The wireless power transmitter according to claim 1, wherein the transmitter control unit is further configured to receive a coil-signal that is representative of the current, or a voltage, in the transmitter coil and/or representative of variations in the current, or a voltage, in the transmitter coil.

3. The wireless power transmitter according to claim 2, wherein the transmitter control unit is configured to determine the first proximity indicator based at least in part on the coil-signal.

4. The wireless power transmitter according to claim 3, wherein the coil-signal, on which the determination of the first proximity indicator is based at least in part, is a coil-signal that is representative of the current, or a voltage, in the transmitter coil at a time, where the wireless power transmitter is in the blanking-period mode of operation, and/or
wherein the coil-signal, on which the determination of the first proximity indicator is based at least in part, is a coil-signal that is representative of the current, or a voltage, in the transmitter coil at a time, where the
wireless power transmitter is in the power-transmission mode of operation.

5. The wireless power transmitter according to any of the previous claims, wherein the operation of the wireless power transmitter is **characterised by** a transmission time period which is a time period during which the wireless power transmitter is in the power-transmission mode of operation and by a blanking time period during which the wireless power transmitter is in the blanking-period mode of operation.

6. The wireless power transmitter according to claim 5, wherein the transmission time period and/or the blanking time period is a predetermined time period, or
wherein the transmission time period and/or the blanking time period is dynamically set by the transmitter control unit, or
wherein the transmitter control unit is configured to switch between a predetermined time period and a dynamic time period for one or both of the power-transmission mode and the blanking-period mode.

7. The wireless power transmitter according to any of claims 5-6, wherein the blanking time period is at least 0.1 milliseconds, such as at least 1 millisecond, such as at least 10 milliseconds, such as at least 100 milliseconds, and/or the transmission time period is at least 0.1 seconds, such as at least 1 second, such as at least 2 seconds, such as at least 3 seconds, such as at least 4 seconds, and/or wherein the blanking time period is less than 800 milliseconds, such as less than 500 millisecond, such as less than 300 milliseconds, such as less than 200 milliseconds, such as less than 100 milliseconds.

8. The wireless power transmitter according to any of the previous claims, wherein the wireless power transmitter further comprises a first transmitter communication unit (15) configured for sending and receiving a wireless signal, the transmitter control unit being configured to determine a signal strength indicator indicative of the signal strength of a received wireless signal from an external wireless power transmitter, and
wherein the transmitter control unit is further configured to determine a second proximity indicator indicative of a proximity of the external wireless power transmitter, the second proximity indicator being based on the signal strength indicator.

9. The wireless power transmitter according to any of the previous claims, wherein the transmitter control unit is configured to reduce the current generated by the transmitter control unit in the transmitter coil, or to shut down power transmission in response to any proximity indicator indicating the proximity of an external wireless power transmitter.

10. The wireless power transmitter according to any of the previous claims, wherein the transmitter control unit is further configured to determine a foreign object loss, the foreign object loss being indicative of the difference in power transmitted by the wireless power transmitter and power received by one or more wireless power receivers, and
wherein the transmitter control unit is configured to reduce the current generated by the transmitter control unit in the transmitter coil or to shut down power transmission in response to the foreign object loss indicating a foreign object.

11. The wireless power transmitter according to any of the previous claims, wherein the wireless power transmitter further comprises a transmitter control unit (20) configured to perform a Foreign Object Detection comprising obtaining one or more measurements on power harvested from the wireless power transmitter,
wherein the wireless power transmitter is configured to transmit a signal at predetermined time intervals, the signal indicating a synchronisation time,
wherein the transmitter control unit is configured to perform the one or more measurements on harvested power during one or more FOD time periods occurring at predetermined time intervals relative to the synchronisation time, and
wherein the transmitter control unit is configured to assume as part of its Foreign Object Detection that associated power receivers do not harvest power from it during the FOD time periods and/or that associated power receivers substantially reduce power harvesting from it during the FOD periods.

12. **A wireless power transfer system** comprising a wireless power transmitter (5) according to any of claims 1 - 11, and one or more wireless power receivers configured for harvesting wireless power from the wireless power transmitter.

13. **A method of operating a wireless power transmitter** comprising a transmitter coil, the method comprising:
- Transmitting a wireless power transfer signal in a power-transmission mode, the wireless power transfer signal being transmitted using a magnetic charging field configured for transmission of power, the magnetic charging field being caused by a current in the transmitter coil,
- Reducing the current in the transmitter coil to substantially zero in a blanking-period mode,
- Switching between the power-transmission mode and the blanking-period mode,
- Determining a first proximity indicator indicative of a detection of an external magnetic field.

14. The method according to claim 13, wherein the wireless power transmitter is a wireless power transmitter according to any of claims 1-11.

15. **A non-transitory computer readable medium** having stored thereon instructions that when executed by processing circuitry of a wireless power transmitter cause the processing circuitry to perform the steps of the method of claim 13.
